# Europäisches Patentamt

# European Patent Office

# Office européen des brevets

(19)

(11) Veröffentlichungsnummer: **0 090 264**
**B1**

(12) **EUROPÄISCHE PATENTSCHRIFT**

(45) Veröffentlichungstag der Patentschrift:
14.10.87

(51) Int. Cl.⁴: **F 22 B 37/32,** B 01 D 45/12,
B 04 C 11/00

(21) Anmeldenummer: **83102609.1**

(22) Anmeldetag: **16.03.83**

(54) Einrichtung zum Entwässern von Dampf in Dampfkraftwerken.

(30) Priorität: **30.03.82 DE 3211784**

(43) Veröffentlichungstag der Anmeldung:
**05.10.83 Patentblatt 83/40**

(45) Bekanntmachung des Hinweises auf die Patenterteilung:
**14.10.87 Patentblatt 87/42**

(84) Benannte Vertragsstaaten:
**AT BE CH GB LI NL**

(56) Entgegenhaltungen:
**DE-B-2 620 347**

**"DÜRRMITTEILUNGEN", Heft 21, Dezember 1964
TECHNISCHE ÜBERWACHUNG, Band 9, Nr. 2,
Februar 1968, Seiten 46-50; J. VOLLRADT:
"Dampfabscheidung bei Siedewasser- und
Siedeüberhitzerreaktoren"**

(73) Patentinhaber: **Siemens Aktiengesellschaft Berlin
und München, Wittelsbacherplatz 2, D-8000
München 2 (DE)**

(72) Erfinder: **Lösel, Georg, Kirchenweg 3, D-8521
Uttenreuth (DE)**
Erfinder: **Schneider, Egon, Schwalbenweg 9,
D-8521 Grossenseebach (DE)**

EP 0 090 264 B1

### Beschreibung

Die Erfindung betrifft eine Einrichtung zum Entwässern von Dampf in Dampfkraftwerken mit mehreren Zyklonabscheidern, die in ihrem oberen Bereich mindestens annähernd tangential verlaufende Zuführungsleitungen für ein Dampf-Wasser-Gemisch aufweisen, und deren unteres Ende über eine Auslaßleitung mit einem Wasserbehälter verbunden ist, der an seinem unteren Ende mit einer Wasserabzugsleitung versehen ist und dessen oberer Bereich mit dem über der Auslaßleitung liegenden Teil der Zyklonabscheider durch Ausgleichsleitungen verbunden ist.

Bei einer solchen Einrichtung, die im Heft 27 der "Dürr-Mitteilungen", Dez. 1964, Seite 5 schematisch dargestellt ist, ist die Ausgleichsleitung zwischen dem Wasserbehälter und den Zyklonabscheidern dadurch gegeben, daß der an der Oberseite der Zyklonabscheider und des Wasserbehälters angebrachte Dampfauslaß nach oben in eine gemeinsame, vertikal verlaufende Dampfleitung fürt. Bei solchen Einrichtungen können trotz der dem Wasserbehälter zugeordneten Wasserstandsregelung Instabilitäten auftreten und zum Beispiel dazu führen, daß Dampf aus einzelnen Abscheidern durch deren Auslaßleitung in den Wasserbehälter gelangt, während andere womöglich mit Wasser überspeist und damit verstopft werden.

Die Erfindung geht demgegenüber von der Aufgabe aus, eine Stabilisierung des Druckes und des Wasserstandes bei Einrichtungen der eingangs genannten Art zu erreichen.

Erfindungsgemäß ist vorgesehen, daß die Ausgleichsleitungen vom höchsten Punkt des Wasserbehälters ausgehen und steigend zu dem über den Zuführungsleitungen liegenden Rohr der Zyklonabscheider führen.

Mit der erfindungsgemäßen Ausbildung kann man, wie Versuche gezeigt haben, eine stabilere Wasserstandsregelung erhalten, insbesondere können Störungen in einem der Zyklonabscheider nicht mehr auf die anderen Abscheider zurückwirken. Das Eindringen von Dampf in den Wasserbereich des Wasserbehälters ist praktisch vollständig vermieden. Dies ist deswegen erstaunlich, weil es dafür bisher keine einfache Erklärung gibt. Auch eine mathematische Behandlung ist wegen der Vielzahl der Parameter und der wechselseitigen Beeinflussungsmöglichkeiten noch nicht möglich gewesen.

Vorzugsweise gehen die Ausgleichsleitungen von einem Fortsatz mit kleineren Breitenabmessungen als der Wasserbehälter aus, der an der Oberseite des Wasserbehälters sitzt. Dies erleichtert die Fertigung und ist auch im Hinblick auf Wärmespannungen günstig.

Die Erfindung wird vorteilhaft mit größter Symmetrie der Einrichtung verwirklicht. Der Wasserbehälter sitzt insbesondere in der Mitte der auf einem Kreis gruppierten Zyklonabscheider. Die Ausgleichsleitungen sind alle gleich lang und bilden die einzige wasserfreie Verbindung des Wasserbehälters mit einer von den Zyklonabscheidern gespeisten Dampfleitung. Eine direkte Verbindung des Wasserbehälters mit der Dampfleitung kann entfallen.

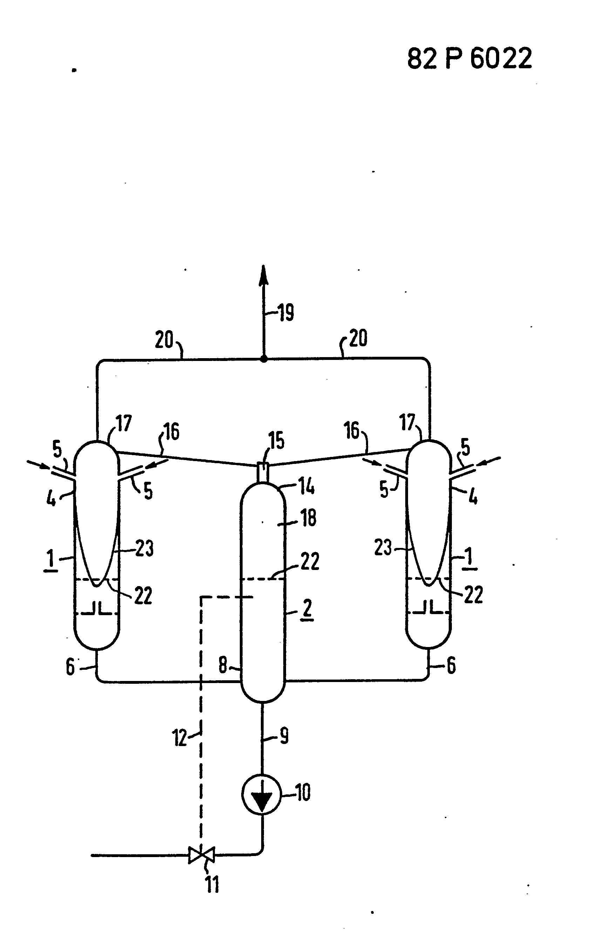

Zur näheren Erläuterung der Erfindung wird anhand der beiliegenden Zeichnung ein Ausführungsbeispiel beschrieben. Dabei ist der Übersichtlichkeit halber nur die Gruppierung der Zyklonabscheider und des Wasserbehälters dargestellt. Diese Einrichtung sitzt im Rahmen eines Dampfkraftwerkes zum Beispiel an der gleichen Stelle wie nach der eingangs genannten Zeitschrift.

Die Einrichtung umfaßt entsprechend dem Durchsatz von 2000 t/h Dampf mehrere, zum Beispiel sechs gleiche Zyklonabscheider 1, die auf einem Kreis in gleicher Höhe angeordnet sind. In der Mitte befindet sich ein Wasserbehälter 2. Dies ist ebenso wie die Zyklonabscheider 1 ein länglicher zylindrischer Behälter mit vertikaler Achse.

Jeder Zyklonabscheider 1 besitzt in seinem oberen Bereich 4 um den Umfang verteilte, tangential einmündende Zuführungsleitungen 5 für das von dem Dampfkessel, insbesondere einem Benson-Kessel, kommende Dampf-Wasser-Gemisch. Durch die tangentiale Einleitung des Gemisches ergibt sich eine Zentrifugalwirkung, mit der das Wasser des Gemisches auszentrifugiert wird, so daß es nach unten in eine Auslaßleitung 6 gelangt.

Die Auslaßleitungen 6 münden seitlich in den unteren Bereich 8 des Wasserbehälters 2. Von dort kann das Wasser durch die nach unten abgehende Wasserabzugsleitung 9 in den Kessel zurückgefördert werden, zum Beispiel von einer Pumpe 10 über ein Stellventil 11, das entsprechend der Wirkungslinie 12 nach dem Wasserstand im Wasserbehälter 2 geregelt wird.

Auf der gewölbten oberen Stirnseite 14 des Wasserbehälters 2 sitzt, wie die Figur zeigt, zentrisch ein Rohrstutzen 15. Von diesem gehen gleichmäßig steigend angeordnete Ausgleichsleitungen 16 aus, die mit annähernd gleicher Länge von zum Beispiel 30 m vom Wasserbehälter 2 zu allen den Zyklonabscheidern 1 führen. Dort münden sie in die Kuppe 17 der Zyklonabscheider 1 oberhalb der Zuführungsleitungen 5. Die Ausgleichsleitungen 16 sind die einzige Verbindung, die der wasserfreie Raum 18 des Wasserbehälters 2 mit der Dampfsammelleitung 19 hat, die von den Zyklonabscheidern 1 über die Dampfauslaßleitungen 20 gespeist wird und in den Überhitzerbereich des nicht gezeichneten Dampfkessels führt.

Die Ausgleichsleitungen 16 haben eine Nennweite von mindestens 50 mm, so daß Druckschwankungen zwischen den Abscheidern 1 und dem Wasserbehälter 2 ohne nennenswerten Strömungswiderstand und damit verzögerungsfrei ausgeglichen werden.

Jedenfalls ergibt sich bei der erfindungsgemäßen Einrichtung eine stabile Fahrweise, in der der gestrichelt angedeutete mittlere Wasserstand 22 in allen Abscheidern 1 und im Wasserbehälter 2 praktisch gleich hoch ist und gut geregelt werden kann. Der tatsächliche Wasserstand bei Betrieb der Zyklonabscheider 1 ist jedoch bekanntlich ein Rotationsparaboloid, wie bei 23 angedeutet ist.

## Patentansprüche

1. Einrichtung zum Entwässern von Dampf in Dampfkraftwerken mit mehreren Zyklonabscheidern (1), die in ihrem oberen Bereich mindestens annähernd tangential verlaufende Zuführungsleitungen (5) für ein Dampf-Wasser-Gemisch aufweisen, und deren unteres Ende über eine Auslaßleitung (6) mit einem Wasserbehälter (2) verbunden ist, der an seinem unteren Ende mit einer Wasserabzugsleitung (9) versehen ist und dessen oberer Bereich mit dem über der Auslaßleitung (6) liegenden Teil der Zyklonabscheider (1) durch Ausgleichsleitungen (16) verbunden ist, dadurch gekennzeichnet, daß die Ausgleichsleitungen (16) vom höchsten Punkt des Wasserbehälters (2) ausgehen und steigend zu dem über den Zuführungsleitungen (5) liegenden Bereich (17) der Zyklonabscheider (1) führen.

2. Einrichtung nach Anspruch 1, dadurch gekennzeichnet, daß die Ausgleichsleitungen (16) von einem Fortsatz (15) mit kleineren Breitenabmessungen als der Wasserbehälter (2) ausgehen, der an der Oberseite (14) des Wasserbehälters (2) sitzt.

3. Einrichtung nach Anspruch 1 oder 2, dadurch gekennzeichnet, daß der Wasserbehälter (2) in der Mitte der auf einem Kreis gruppierten Zyklonabscheider (1) angeordnet ist und daß die Ausgleichsleitungen (16) annähernd gleich lang sind und die einzige wasserfreie Verbindung des Wasserbehälters (2) mit einer von den Zyklonabscheidern (1) gespeisten Dampfleitung (19) bilden.

## Claims

1. Apparatus for the removal of water from steam in steam power stations with several cyclone separators (1) which have in their upper regions (respective) supply lines (5), for a steam-water-mixture, extending at least approximately in a tangential manner and the lower end of which, by way of an outlet line (6), is connected to a water reservoir (2) which is provided with a water discharge line (9) at its lower end and the upper region of which is connected by compensating lines (16) to the part of the cyclone separators (1) which lies above the outlet line (6), characterised in that the compensating lines (16) originate from the highest point of the water reservoir (2) and extend upwardly to the region (17) of the cyclone separators (1) which lies above the supply lines (5).

2. Apparatus according to claim 1, characterised in that the compensating lines (16) originate from an extension (15) which has a smaller width than the water reservoir (2) and which is arranged on the upper side (14) of the water reservoir (2).

3. Apparatus according to claim 1 or 2, characterised in that the water reservoir (2) is arranged in the middle of the cyclone separators (1), which are grouped in a circle, and that the compensating lines (16) are approximately the same length and form the only connection free of water of the water reservoir (2) with a steam line (19) fed by the cyclone separators (1).

## Revendications

1. Installation pour déshydrater de la vapeur dans des centrales à vapeur, comprenant plusieurs separateurs à cyclone (1), qui comportent, dans leur partie supérieure, des conduits d'amenée (5) d'un mélange de vapeur et d'eau s'étendant au moins à peu près tangentiellement et dont l'extrémité inférieure communique par un conduit de sortie (6) avec une cuve à eau (2), qui est munie à son extrémité inférieure d'un conduit d'évacuation de l'eau (9) et dont la partie supérieure communique par des conduits d'égalisation (16) avec la partie des séparateurs à cyclone (1) se trouvant au-dessus du conduit de sortie (6), caractérisée en ce que les conduits d'égalisation (16) partent du point le plus élevé de la cuve à eau (2) et mènent suivant une pente ascendante à la partie (17) des séparateurs à cyclone (1) qui se trouve au-dessus des conduits d'amenée (5).

2. Installation suivant la revendication 1, caractérisée en ce que les conduits d'égalisation (16) partent d'un prolongement (15) qui a des dimensions en largeur plus petites que la cuve à eau (2) et qui se trouve à la partie supérieure (14) de la cuve à eau (2).

3. Installation suivant la revendication 1 ou 2, caractérisée en ce que la cuve à eau (2) est disposée au centre des séparateurs à cyclone (1) regroupés sur un cercle, et en ce que les conduits d'égalisation (16) ont à peu près la même longueur et forment la seule communication exempte d'eau de la cuve à eau (2) avec un conduit pour de la vapeur (19) alimenté par les séparateurs à cyclone (1).

82 P 6022